# EUROPÄISCHE PATENTSCHRIFT

(11) **EP 0 465 843 B1**
(45) Veröffentlichungstag und Bekanntmachung des Hinweises auf die Patenterteilung: **28.09.1994**
(21) Anmeldenummer: 91109421.7
(22) Anmeldetag: 08.06.1991
(51) Int. Cl.: B01D 46/10, B01D 46/02

(54) **Filterkassette für Schwebstoffe**
Dust filter unit
Cassette filtrante pour poussières

(30) Priorität: 13.07.1990 CH 2352/90
(43) Veröffentlichungstag der Anmeldung: 15.01.1992
(73) Patentinhaber: Unifil AG, Filtertechnik, CH-5105 Auenstein (CH)
(72) Erfinder: Frei, Werner, CH-5105 Auenstein (CH)
(74) Vertreter: Blum, Rudolf Emil Ernst

(56) Entgegenhaltungen:
- FR-A- 2 206 115
- FR-A- 2 476 785
- US-A- 3 076 303

## Beschreibung

Die Erfindung betrifft eine Filterkassette für Schwebstoffe, mit einem Rahmen und einer vom Rahmen gehaltenen Filterbahn, wobei die Rahmenholme ein Kastenprofil aufweisen, in denen ein Mündungsrand der Filterbahn gasdicht eingeklemmt liegt.

Eine solche Filterkassette ist durch die CH-C-597 903 bekannt. Bei dieser Filterkassette wird die Filterbahn mittels Federklemmen in den Rahmenholmen gehalten. Diese an sich befriedigende Filterkassette setzt aber voraus, dass die Federklemme entweder die Länge eines Rahmenholmen haben muss, oder dass pro Rahmenholm so viele Federklemmen verwendet werden, dass eine Federklemme an die andere anschliesst, damit der gesamte Mündungsbereich der Filterbahn abdichtend mit dem Rahmen verbunden ist, damit also keine ungeklemmten Bereiche zwischen Filterbahn und Rahmen verbleiben, durch die dann die zu reinigende Luft wegen des Weges des geringsten Widerstandes strömen würde. In der Praxis haben sich aber folgende Probleme gezeigt: Die Klemmkraft der Federklemme wirkt direkt auf die Filterbahn, so dass ein Reissen der als Vliess vorliegenden Filterbahn an der Klemmstelle eintreten kann. Es hat sich weiterhin gezeigt, dass die Abdichtung der Filterbahn in den Ecken einer üblichen rechteckigen Filterkassette ein grosses Problem ist. Weiterhin setzt es handwerkliches Geschick voraus, den Randbereich der Filterbahn über den ganzen Flächenbereich der Filterkassette gleichmässig in die vier Rahmenholmen einzulegen und mittels der Federklemmen daran festzuhalten, wenn nicht vorher der Randbereich der Filterbahn mit Klebstoff versehen in die Rahmenholme eingeklebt wird. Im letztgenannten Fall ist dann wieder die Entfernung der Filterbahn vom Rahmen beim Auswechseln der Filterbahn ein Problem.

Eine andere Filterkassette ist durch die US-A-3076303 bekannt. Diese Filterkassette hat einen Rahmen, in welchem der Umfang eines plattenförmigen Filtermaterials durch Schnappverschluß gehalten wird.

Es wird die Schaffung einer Filterkassette bezweckt, bei der die vorerwähnten Nachteile vermieden werden können, so daß sie leicht geöffnet werden kann, um die außerhalb des Rahmens liegenden Filterhauben auszuwechseln.

Die erfindungsgemässe Ausbildung der Filterkassette ergibt sich aus dem Anspruch 1.

In der Zeichnung ist ein Ausführungsbeispiel des Erfindungsgegenstandes dargestellt. Es zeigen:
Fig. 1 einen Querschnitt durch eine äussere Holmenrinne des Rahmens,
Fig. 2 Querschnitt durch den Mündungsrand der Filterbahn mit Wulst,
Fig. 3 einen Querschnitt durch eine innere Holmenrinne des Rahmens,
Fig. 4 einen Querschnitt nach der Linie IV-IV in Fig. 6,
Fig. 5 einen Teil des in Fig. 4 gezeigten Rahmenholmes mit einem Werkzeug zum Entfernen der äusseren Holmenrinne von der inneren Holmenrinne, und
Fig. 6 eine schaubildliche Darstellung der Filterkassette.

Mit der Filterkassette sollen Schwebstoffe aus einem gasförmigen Medium, also z.B. Luft, ausgefiltiert werden. Die Filterkassette hat einen Rahmen 1 und eine vom Rahmen gehaltene Filterbahn 2, wobei die Filterbahn in einzelne Filterhauben 3 unterteilt ist.

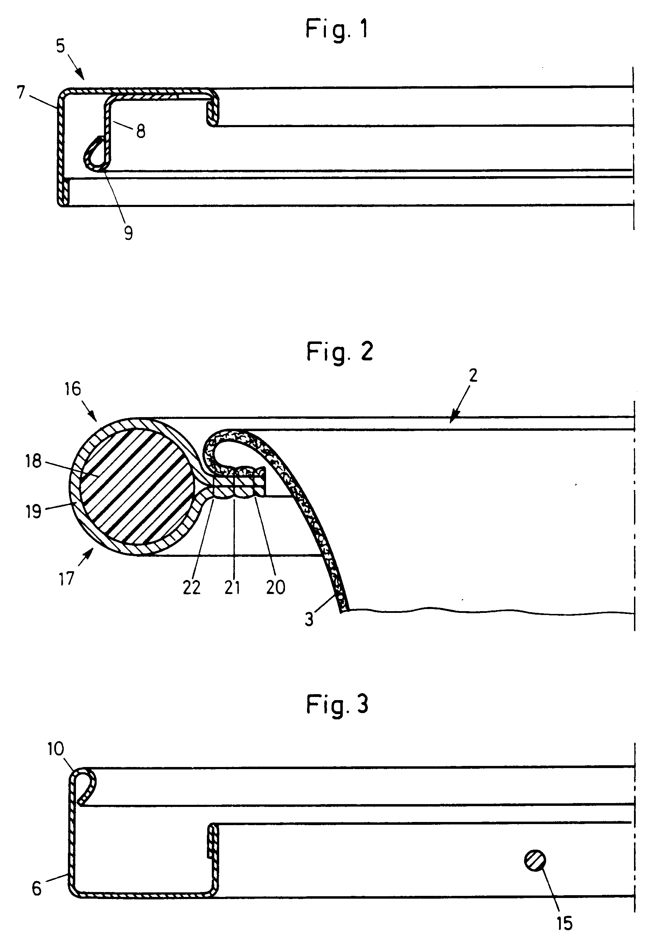

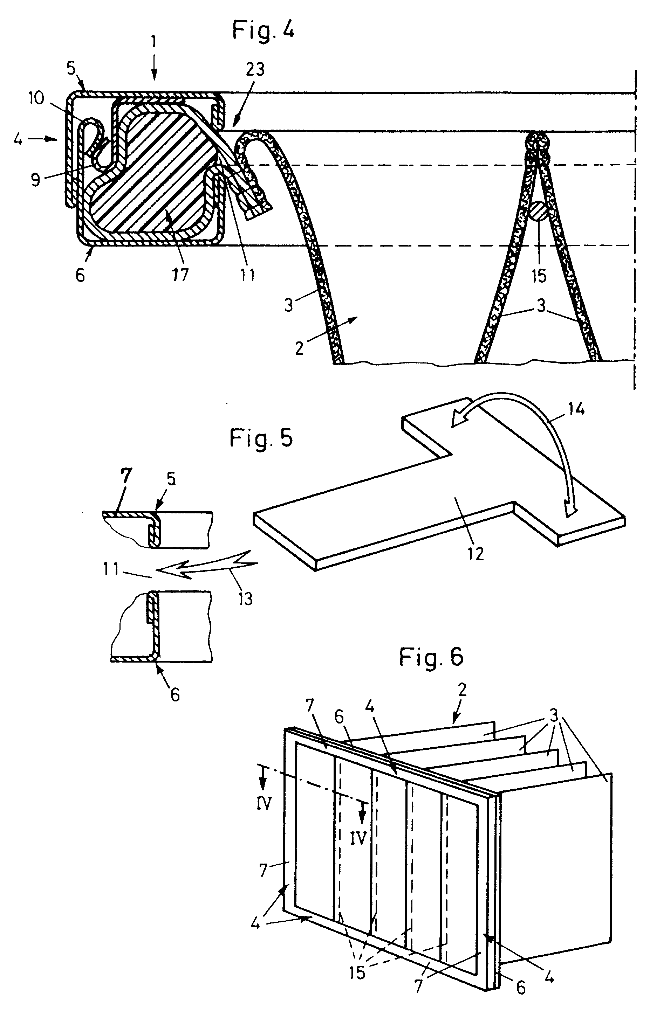

Der im Beispiel viereckige Rahmen 1 hat die vier Rahmenholme 4. Jeder Rahmenholm 4 ist als Kastenprofil ausgebildet und hat eine äussere Holmenrinne 5 und eine innere Holmenrinne 6. Die äussere Holmenrinne 5 umfasst zwei Schenkel 7 und 8. Z.B. aus den Figuren 1 und 3 ist deutlich ersichtlich, dass die Ränder der Holmenrinnen 5 und 6 umgebördelt sind. Jede Holmenrinne 5, 6 weist federelastische Hintergreiforgane 9 bzw. 10 auf, die bei zum Rahmenholm zusammengesetzten Holmenrinnen 5, 6 gemäss Fig. 4 einander hintergreifen. Diese beiden Hintergreiforgane 9, 10 bilden einen Schnappverschluss zwischen den beiden Holmenrinnen 5 und 6. In diesem zusammengebauten Zustand des Rahmens 1 ergibt sich zwischen der äusseren Holmenrinne 5 und der inneren Holmenrinne 6 ein Spalt 11, der aus Fig. 5 deutlich ersichtlich ist. Soll der zusammengebaute Rahmen 1 wieder geöffnet werden, so kann z.B. ein solches in Fig. 5 dargestellte Werkzeug 12 verwendet werden, das in Richtung eines Pfeiles 13 in den Spalt 11 eingesteckt und dann in Richtung eines Doppelpfeiles 14 geschwenkt wird zum Vergrössern des Spaltes 11 und damit zum Auseinanderbewegen von äusserer Holmenrinne 5 und innerer Holmenrinne 6 und damit Oeffnen des Schnappverschlusses zwischen den Hintergreiforganen 9 und 10. Dieses vorerwähnte Einsetzen des Werkzeuges 12 wird an mehreren Stellen des Mündungsrandes der Filterhaube vorgenommen, so dass hierdurch der gesamte zweiteilige Rahmen geöffnet wird. Aus den Figuren 3, 4 und 6 ist ersichtlich, dass zwei einander gegenüberliegende innere Holmenrinnen 6 des Rahmens 1 mit Distanzstäben 15 für die Filterbahn 2 versehen sind, wobei diese Distanzstäbe 15 zwischen benachbarten Filterhauben 3 liegen. Die Filterkassette dient z.B. als Industriefilter zum Abfiltern von verstaubter Luft und wird z.B. in nicht dargestellter Weise in einer Maueröffnung eingesetzt. Die Filterkassette soll hierbei in der in Fig. 6 gezeigten Stellung in die vorerwähnte Mauerausnehmung eingesetzt werden, wobei also die Filterhauben 3 vertikal stehen, damit sie nicht nach unten hängen und aneinander anliegen.

Die Ausbildung der Filterbahn 2 ist besonders aus den Figuren 2 und 4 ersichtlich. Die in Fig. 2 gezeigte Filterbahn 2 hat einen Mündungsrand 16. Dieser Mündungsrand ist mit einem Wulst 17 versehen, der bei geschlossenem Rahmen 1 gemäss Fig. 4 in den Holmenrinnen 5 und 6 eingebettet liegt. Der Wulst 17 weist einen inneren Elastomer-Strang 18 und eine äussere Ummantelung 19 auf, die mit der Filterbahn 2 verbunden ist. Beim dargestellten Beispiel ist die Ummantelung 19 mit der Filterbahn 2 vernäht, und zwar an den beiden Nahtstellen 20 und 21; zusätzlich ist die Ummantelung 19 noch mit einer Naht 22 versehen.

Zur Montage der Filterbahn 2 im Rahmen 1 wird der in Fig. 2 gezeigte Bereich der Filterbahn 2 in die aus Fig. 3 ersichtliche innere Holmenrinne 6 so eingelegt, dass der Wulst 17 im Innern der Rinne 6 zu liegen kommt. Nunmehr wird die aus Fig. 1 ersichtliche äussere Holmenrinne 5 über die innere Holmenrinne 6 gestülpt und nach unten gedrückt, so dass gemäss Fig. 4 die beiden Holmenrinnen 5 und 6 durch die Hintergreiforgane 9 und 10 mittels Schnappverschluss miteinander verbunden sind. Hierbei ist der das Hintergreiforgan 10 aufweisende Schenkel der inneren Holmenrinne 6 (Fig. 3) zwischen die beiden Schenkel 7 und 8 der äusseren Holmenrinne 5 (Fig. 1) eingesetzt worden. Bei geschlossenem Rahmen nach Fig. 4 liegt ein Uebergangsbereich 23 von Wulst 17 und Filterbahn 2 im Spalt 11 (Fig. 4, 5).

Muss nach einem längeren Betrieb der Filterkassette die Filterbahn entweder gereinigt oder durch eine neue ersetzt werden, so wird in der erwähnten Weise mit dem Werkzeug 12 nach Fig. 5 am Uebergangsbereich 23 nach Fig. 4 in den Spalt 11 eingefahren und in der erwähnten Weise der Rahmen geöffnet. Sowohl die Demontage der Filterbahn 2 als auch deren Montage im Rahmen ist einfach zu bewerkstelligen, ohne Gefahr einer nicht fachmännischen Lage der Filterbahn im Rahmen. Die gemäss Fig. 4 montierte Filterkassette wird dann am Ort der Verwendung in die erwähnte Mauerausnehmung eingesetzt, wobei die äussere Holmenrinne 5 der Schmutzseite des zu reinigenden Mediums zugewandt liegt. Die Filterkassette wird in der erwähnten Maueröffnung mittels nicht dargestellter Klemmorange festgehalten, die einerseits an der Mauer und andererseits an der äusseren Holmenrinne 5 abgestützt werden, so dass hierdurch die beiden Holmenrinnen 5 und 6 und damit der zwischenliegende Wulst 17 federelastisch zusammengedrückt werden.

## Patentansprüche

1. Filterkassette für Schwebstoffe, mit einem Rahmen (1) und einer vom Rahmen gehaltenen Filterbahn (2), wobei die Rahmenholme (4) ein Kastenprofil aufweisen, in denen ein Mündungsrand (16) der Filterbahn (2) gasdicht eingeklemmt liegt, wobei jeder Rahmenholm (4) aus einer äusseren Holmenrinne (5) und einer inneren Holmenrinne (6) zusammengesetzt ist und jede Holmenrinne (5,6) federelastische Hintergreiforgane (9,10) aufweist, die bei zum Rahmenholm zusammengesetzten Holmenrinnen (5,6) mittels Schnappverschluss einander hintergreifen, wobei die äussere Holmenrinne (5) zwei Schenkel (7,8) aufweist und die innere Holmenrinne (6) zwischen den beiden Schenkein (7,8) der äusseren Holmenrinne (5) gehalten ist, wobei der Mündungsrand (16) der Filterbahn mit einem Wulst (17) versehen ist, der zwischen den äusseren und inneren Holmenrinnen (5,6) eingebettet liegt und der übrige Teil der Filterbahn in Filterhauben (3) unterteilt ist, die ausserhalb des Rahmens (1) liegen, und sich zwischen der äusseren Holmenrinne (5) und der inneren Holmenrinne (6) ein Spalt (11) befindet, in dem sich ein Uebergangsbereich (23) von Wulst (17) und Filterhauben (3) befindet.

2. Filterkassette nach Anspruch 1, dadurch gekennzeichnet, dass die Ränder der Holmenrinnen (5,6) umgebördelt sind.

3. Filterkassette nach Anspruch 1, dadurch gekennzeichnet, dass der Wulst (17) einen inneren Elastomer-Strang (18) und eine äussere Ummantelung (19) aufweist, die mit der Filterbahn (2) verbunden ist.

4. Filterkassette nach Anspruch 3, dadurch gekennzeichnet, dass die Ummantelung (19) mit der Filterbahn (2) vernäht (20,21) ist.

5. Filterkassette nach Anspruch 1, dadurch gekennzeichnet, dass zwei einander gegenüberliegende innere Holmenrinnen (6) des Rahmens (1) mit Distanzstäben (15) für die Filterhauben (3) versehen sind, wobei die Distanzstäbe (15) zwischen benachbarten Filterhauben (3) liegen.

6. Verfahren zum Oeffnen der Filterkassette und Entfernen der Filterbahn (2) vom Rahmen (1) nach Anspruch 1, dadurch gekennzeichnet, dass in den Spalt (11) ein Werkzeug (12) eingesetzt wird zum vergrössern des Spaltes (11) und damit zum Auseinanderbewegen von äusserer Holmenrinne (5) und innerer Holmenrinne (6) und damit Oeffnen des Schnappverschlusses (9,10).

## Claims

1. Filter cassette for floating materials, with a frame (1) and a filter web (2) held by the frame, whereby the spars (4) of the frame have a box section in which an aperture edge (16) of the filter web (2) is located in a gastight manner, whereby each frame spar (4) is composed of an outer spar channel (5) and an inner spar channel (6) and each spar channel (5, 6) includes spring-elastic gripping-around members (9, 10) which grip around each other by a snap lock when the spar channels (5, 6) are assembled as the frame spar, whereby the outer spar channel (5) includes two legs (7, 8) and the inner spar channel (6) is held between the two legs (7, 8) of the outer spar channel (5), whereby the aperture edge (16) of the filter web is provided with a bead (17) which is embedded between the outer and inner spar channels (5, 6) and the remaining part of the filter web is divided into filter hoods (3) which are located outside of the frame (1), and a gap (11) is located between the outer spar channel (5) and the inner spar channel (6) in which a transition area (23) between bead (17) and filter hoods (3) is located.

2. Filter cassette according to claim 1, characterized in that the edges of the spar channels (5, 6) are bent over.

3. Filter cassette according to claim 1, characterized in that the bead (17) includes an inner elastomeric strand (18) and an outer jacket (19) which is connected to the filter web (2).

4. Filter cassette according to claim 3, characterized in that the jacket (19) is sewn (20, 21) to the filter web (2).

5. Filter cassette according to claim 1, characterized in that two oppositely located inner spar channels (6) of the frame (1) are provided with distance bars (15) for the filter hoods (3), whereby the distance bars (15) are located between adjacent filter hoods (3).

6. Method of opening the filter cassette and removing of the filter web (2) from the frame (1) according to claim 1, characterized in that a tool (12) is inserted into the gap (11) for an enlarging of the gap (11) and thus moving the outer spar channel (5) and inner spar channel (6) away from each other and thus opening the snap lock (9, 10).

## Revendications

1. Cassette à filtre pour particules en suspension avec un cadre (1) et un filtre (2) maintenu par le cadre, les longerons (4) du cadre formant un profil creux dans lequel un bord (16) de l'embouchure du filtre (2) est coincé de manière étanche au gaz, chaque longeron (4) étant constitué d'une gouttière extérieure (5) et d'une gouttière intérieure (6) comportant chacune des organes élastiques d'accouplement (9, 10) qui se verrouillent par engagement réciproque lorsque les gouttières (5, 6) sont réunies pour former le longeron du cadre, la gouttière extérieure (5) comportant deux branches (7, 8) qui maintiennent la gouttière intérieure (6) entre elles, le bord (16) de l'embouchure du filtre comportant un bourrelet (17) captif entre les gouttières extérieure et intérieure (5, 6), le reste du filtre étant divisé en des sacs filtrant (3) situés hors du cadre (1), une fente (11), dans laquelle se trouve une partie intermédiaire (23) entre le bourrelet (17) et les sacs (3), étant prévue entre la gouttière extérieure (5) et la gouttière intérieure (6).

2. Cassette à filtre selon la revendication 1, caractérisée en ce que les bords des gouttières (5, 6) sont repliés.

3. Cassette à filtre selon la revendication 1, caractérisée en ce que le bourrelet (17) comprend une âme élastomère (18) et un manteau extérieur (19) relié au filtre (2).

4. Cassette à filtre selon la revendication 3, caractérisée en ce que le manteau (19) est cousu (20, 21) au filtre (2).

5. Cassette à filtre selon la revendication 1, caractérisée en ce que deux gouttières intérieures (6) du cadre (1) se faisant face comportent des entretoises (15) pour les sacs filtrant (3), ces entretoises (15) étant situées entre des sacs filtrant (3) voisins.

6. Procédé pour ouvrir la cassette à filtre selon la revendication 1 et pour ôter le filtre (2) du cadre (1), caractérisé en ce qu'un outil (12) est inséré dans la fente (11) afin d'élargir celle-ci et écarter ainsi les gouttières extérieure et intérieure (5, 6), pour ouvrir le verrouillage à pression (9, 10).
